# EUROPEAN PATENT APPLICATION

(11) **EP 3 795 287 A1**
(43) Date of publication of application: **24.03.2021**
(21) Application number: 20190724.3
(22) Date of filing: 12.08.2020
(51) Int. Cl.: B23K 26/03, B23K 31/12, B23K 26/21, G01N 25/72

(54) **SYSTEM AND METHOD OF MONITORING LASER WELDING QUALITY BY USING HIGH-SPEED THERMAL IMAGE**

(30) Priority: 02.09.2019 KR 20190107998
(71) Applicant: Monitech Co., Ltd., Busan 46987 (KR)
(72) Inventor: HWANG, Dong Soo, 46294, Busan, (KR); JO, Yong Joon, 16871 Gyeonggi-do (KR); HWANG, Seul Woo, 46961 Busan (KR); SHIN, Jong Hyuk, 15823 Gyeonggi-do (KR)
(74) Representative: Zinkler, Franz

(57) **Abstract**

Provided is a system for monitoring laser welding quality by using a high-speed thermal image, the system including: a laser generation unit (110) generating a laser to weld multiple metals and adjusting an output of the laser; a scanner (130) receiving the laser to generate a laser beam and emitting the laser beam to a boundary between the multiple metals; a high-speed thermal imaging camera (160) acquiring an image of a welding part including a key hole and a melt pool; a temperature change detection unit (170) allocating N×N blocks to the image, and detecting position information and a change in temperature over time of each of the blocks; a memory storing the position information, the change, and a reference value; and a laser welding machine controller (190) comparing the change and the reference value, and outputting a state indicated by a predetermined percentage or more of the blocks as the laser welding quality.

## Description

### CROSS REFERENCE TO RELATED APPLICATION

The present application claims priority to Korean Patent Application No. 10-2019-0107998, filed September 2, 2019, the entire contents of which is incorporated herein for all purposes by this reference.

### BACKGROUND OF THE INVENTION

### Field of the Invention

The present disclosure relates to a system and a method of monitoring laser welding quality by using a high-speed thermal image. More particularly, the present disclosure relates to a system and a method of monitoring laser welding quality by using a high-speed thermal image, wherein a change in temperature over time of a welding part is detected from images acquired by a high-speed infrared thermal imaging camera during laser welding, and the change is compared with a reference value of the change in temperature, so that the quality of laser welding is evaluated on the basis of a result of the comparison.

### Description of the Related Art

There are a number of patents in the related art which relate to systems and methods of monitoring laser welding.

Korean Patent No. 10-1600604 discloses an excitation part using a preset excitation frequency for excitation so that heat is generated at a parent material including a welding part where welding is performed; a camera unit acquiring a thermal image of the welding part; and a controller driving a temperature profile for the welding part from the thermal image, and determining whether the welding is detective, depending on whether the uniformity of the temperature distribution in the extracted temperature profile is within a preset range.

Korean Patent No. 10-1409214 discloses a real-time laser welding monitoring system and a laser welding apparatus, wherein infrared and ultraviolet signals are separately acquired from reflected light reflected during laser welding, a welding state, such as power of laser, the amount of input heat, generation of a key hole, and the degree of penetration, is analyzed from the respective signals, and a material is effectively sprayed with a processing gas, thereby improving the quality of a welding process.

However, the patents do not disclose a configuration that detects a change in temperature over time of a welding part from images acquired by a high-speed infrared thermal imaging camera, compares the change with a reference value of the change in temperature, and monitors the quality of laser welding on the basis of a result of the comparison.

The foregoing is intended merely to aid in the understanding of the background of the present disclosure, and is not intended to mean that the present disclosure falls within the purview of the related art that is already known to those skilled in the art.

### Documents of Related Art

(Patent Document 1) Korean Patent No. 10-1600604; and
(Patent Document 2) Korean Patent No. 10-1409214.

### SUMMARY OF THE INVENTION

The present disclosure is directed to providing a system and a method of monitoring laser welding quality by detecting a change in temperature over time for a welding process from a thermal image of a welding part acquired by a thermal imaging camera during laser welding.

It is to be understood that technical problems to be solved by the present disclosure are not limited to the aforementioned technical problems and other technical problems which are not mentioned will be apparent from the following description to a person with an ordinary skill in the art to which the present disclosure pertains.

The present disclosure provides a system for monitoring laser welding quality by using a high-speed thermal image, the system including: a laser generation unit generating a laser to weld multiple metals and adjusting an output of the laser; a scanner receiving the laser generated by the laser generation unit to generate a laser beam and emitting the laser beam to a boundary between the multiple metals; a high-speed thermal imaging camera acquiring an image of a welding part including a key hole and a middle portion of a melt pool that are generated during laser welding; a temperature change detection unit allocating N×N blocks to the acquired image, and detecting position information and a change in temperature over time of each of the N×N blocks; a memory storing the position information and the change in temperature over time of each of the N×N blocks detected by the temperature change detection unit, and a reference value; and a laser welding machine controller comparing the change in temperature over time of each of the N×N blocks and the reference value stored in the memory, and outputting a state indicated by a predetermined percentage or more of the N×N blocks as the laser welding quality.

In addition, the present disclosure provides a method of monitoring laser welding quality by using a high-speed thermal image, the method including: inputting, at a first step, an image of a welding part including a key hole and a middle portion of a melt pool, which is acquired by a high-speed thermal imaging camera; allocating, at a second step, N×N blocks to the acquired image and detecting a change in temperature over time of each of the N×N blocks; comparing, at a third step, the change in temperature over time detected at each of the allocated N×N blocks and a reference value of the change in temperature stored in a memory; and outputting, as laser welding quality at a fourth step, a state indicated by a predetermined percentage or more of the N×N blocks according to a result of the comparison between the change in temperature over time of each of the N×N blocks and the reference value stored in the memory.

The present disclosure can monitor laser welding quality by detecting a change in temperature over time for a welding process from a thermal image of a welding part acquired by a thermal imaging camera during laser welding.

In addition, the present disclosure can identify the welding quality at the key hole and the melt pool in detail by detecting a change in temperature of the welding part including the key hole and the melt pool from images acquired by the thermal imaging camera at a rate of at least 1,000 frames per second during laser welding.

In addition, since the present disclosure can identify the laser welding quality by detecting a change in temperature of each of the N×N blocks including the key hole and the melt pool from the images acquired by the thermal imaging camera at a rate of at least 1,000 frames per second during laser welding, it is possible to identify whether welding is detective according to the position in each block.

### BRIEF DESCRIPTION OF THE DRAWINGS

The above and other objectives, features, and other advantages of the present disclosure will be more clearly understood from the following detailed description when taken in conjunction with the accompanying drawings, in which:

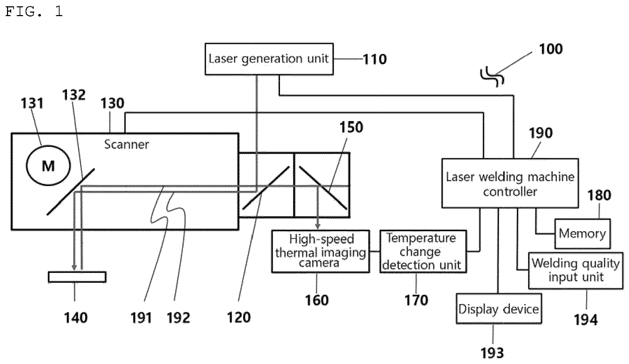

FIG. 1 is a diagram showing a system for monitoring laser welding quality by using a high-speed thermal image according to an embodiment of the present disclosure;

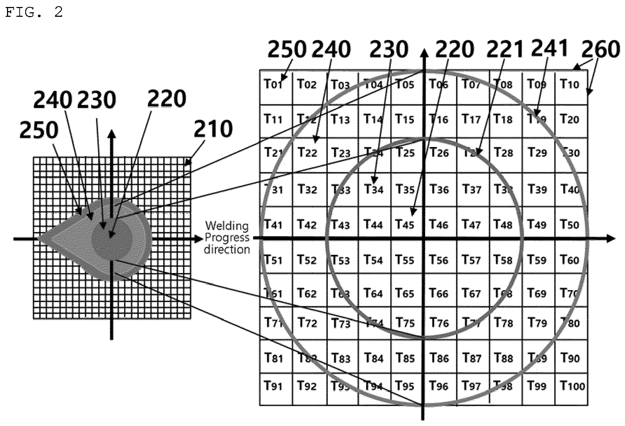

FIG. 2 is a diagram showing temperature of N×N blocks including a key hole and a melt pool, which is output from a high-speed thermal imaging camera, in the system for monitoring laser welding quality by using the high-speed thermal image according to the embodiment of the present disclosure;

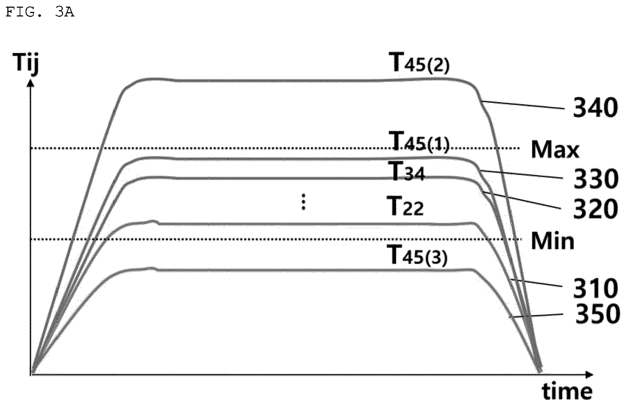

FIG. 3A is a diagram showing a change in temperature over time in one or more blocks where a key hole and a melt pool are positioned, and a reference value of the change, in the system for monitoring laser welding quality by using the high-speed thermal image according to the embodiment of the present disclosure;

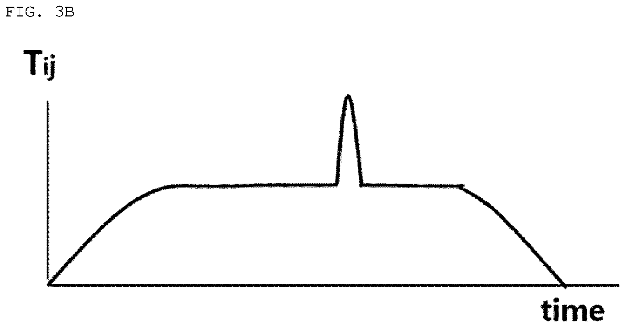

FIG. 3B is a diagram showing one type of welding defect as a change in temperature over time in one or more blocks where a key hole and a melt pool are positioned, in the system for monitoring laser welding quality by using the high-speed thermal image according to the embodiment of the present disclosure;

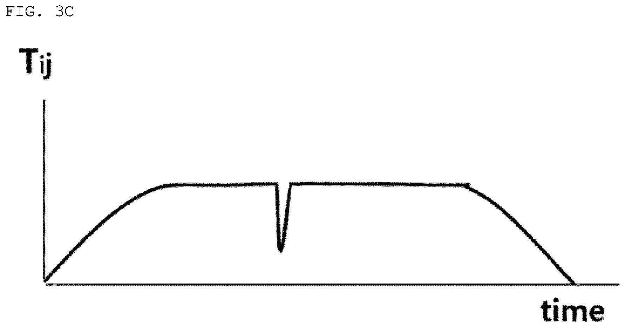

FIG. 3C is a diagram showing another type of welding defect as a change in temperature over time in one or more blocks where a key hole and a melt pool are positioned, in the system for monitoring laser welding quality by using the high-speed thermal image according to the embodiment of the present disclosure; and

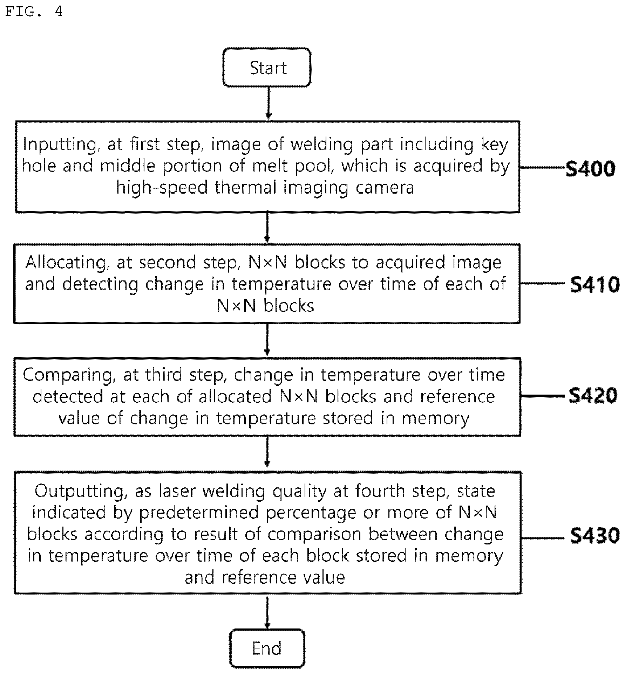

FIG. 4 is a diagram showing a method of monitoring laser welding quality by using a high-speed thermal image according to an embodiment of the present disclosure.

### DETAILED DESCRIPTION OF THE INVENTION

Hereinafter, an embodiment of the present disclosure will be described in detail with reference to the accompanying drawings. In this process, the sizes, shapes, etc. of elements shown in the drawings may be exaggerated for clarity and convenience of description. Furthermore, the meanings of the terms particularly defined considering the configuration and operation of the present disclosure may vary depending on the intention and practice of a user or an operator. These terms should be defined on the basis of the content of the overall specification.

Hereinafter, an exemplary embodiment of the present disclosure will be described with reference to the accompanying drawings.

FIG. 1 is a diagram showing a system for monitoring laser welding quality by using a high-speed thermal image according to an embodiment of the present disclosure.

As shown in FIG. 1, according to the embodiment of the present disclosure, a system 100 for monitoring laser welding quality by using a high-speed thermal image includes: a laser generation unit 110 generating a laser to weld multiple metals and adjusting an output of the laser; a scanner 130 receiving the laser generated by the laser generation unit 110 to generate a laser beam and emitting the laser beam to a boundary between the multiple metals; a high-speed thermal imaging camera 160 acquiring an image of a welding part including a key hole and a melt pool that are generated during laser welding; a temperature change detection unit 170 allocating N×N blocks to the acquired image, and detecting position information and a change in temperature over time of each of the N×N blocks; a memory 180 storing the position information and the change in temperature over time of each of the N×N blocks detected by the temperature change detection unit 170, and a reference value; and a laser welding machine controller 190 comparing the change in temperature over time of each of the N×N blocks and the reference value stored in the memory 180, and outputting a state indicated by a predetermined percentage or more of the N×N blocks as the laser welding quality.

As shown in FIG. 1, the high-speed thermal imaging camera 160 acquires images of the welding part at a rate of at least 1,000 frames per second, and outputs the images.

As shown in FIG. 1, the system 100 for monitoring laser welding quality by using the high-speed thermal image according to the embodiment of the present disclosure includes a first mirror 120 that leads the laser generated from the laser generation unit 110, to the scanner 130.

As shown in FIG. 1, the scanner 130 includes a second mirror 132 and a motor 131 adjusting operation of the second mirror 132.

The angle of a laser beam that reflects off the second mirror 132 and is emitted to a metal 140 is adjusted by the motor 131 from front to back and side to side.

That is, the laser generated by the laser generation unit 110 reflects off the first mirror 120 and the second mirror 132 and is emitted to a portion including a boundary between multiple metals 140, along an incident laser path 191.

Then, the laser reflecting off the multiple metals 140 reflects off the second mirror 132 and a third mirror 150 and is input to the high-speed thermal imaging camera 160, along a reflecting laser path 192.

FIG. 2 is a diagram showing temperature of N×N blocks including a key hole and a melt pool, which is output from the high-speed thermal imaging camera, in the system for monitoring laser welding quality by using the high-speed thermal image according to the embodiment of the present disclosure.

As shown in FIG. 2, an image output from the high-speed thermal imaging camera 160 shows the temperature of the N×N blocks 260 including a key hole 221 and a middle portion 241 of a melt pool, and the temperature of an area including a peripheral portion of the melt pool.

As shown in FIG. 2, for example, the N×N blocks 260 include the key hole 221 and the middle portion 241 of the melt pool, and are 10×10 blocks. In the 10×10 blocks, the key hole 221 includes 6x6 blocks, and the middle portion 241 of the melt pool includes 4×4 blocks.

As shown in FIG. 2, for example, the temperature of the 6×6 blocks corresponding to the key hole 221 is the highest. The temperature of the 4×4 blocks corresponding to the middle portion 241 of the melt pool is lower than that of the key hole 221 and is the highest in the melt pool. That is, it is found that the temperature decreases as it goes from the key hole 221 to the peripheral portion of the melt pool.

As shown in FIG. 2, one or more blocks 210 include: a block T45 220 and a block T34 230 corresponding to the key hole 221; a block T22 240 corresponding to the middle portion 241 of the melt pool; and a block T01 250 corresponding to the peripheral portion of the melt pool.

As shown in FIGS. 1 and 2, according to the present disclosure, the system 100 for monitoring laser welding quality by using the high-speed thermal image further includes a display device 193.

As shown in FIGS. 1 and 2, the laser welding machine controller 190 outputs welding perfection as welding quality to the display device 193, when changes in temperature over time of 80 % or more of the blocks belonging to the key hole 221 and the middle portion 241 of the melt pool among the N×N blocks 260, which are detected by the temperature change detection unit 170, are within a range of the reference value. The 'welding perfection' means a good welding or welding well done.

As shown in FIGS. 1 and 2, the laser welding machine controller 190 outputs welding perfection as welding quality to the display device 193, when changes in temperature over time of 90 % or more of the blocks belonging to the key hole 221 among the N×N blocks 260, which are detected by the temperature change detection unit 170, are within a range of the reference value.

As shown in FIGS. 1 and 2, when changes in temperature over time of more than 20 % of the N×N blocks 260, which are detected by the temperature change detection unit 170, are outside the reference value, or when a welding defect occurs, the laser welding machine controller 190 controls the display device 193 so as to display the position of the block of which the change in temperature is outside the reference value, or the position of the block where the welding defect occurs.

As shown in FIG. 1, the temperature change detection unit 170 allocates the N×N blocks 260 to the image acquired by the high-speed thermal imaging camera 160, detects position information of each of the blocks and a change in temperature over time thereof, and stores the results in the memory 180. Therefore, the reference value in the N×N blocks 260 for determining welding perfection or welding imperfection may be changed.

For example, welding perfection is determined when changes in temperature over time of 95 % or more of the N×N blocks 260 are within the reference value or welding imperfection is determined when changes in temperature over time of more than 30 % of the blocks are outside the reference value. The reference values of 95% and 30% are, of course, changeable.

As an embodiment, according to the present disclosure, the system 100 for monitoring laser welding quality by using the high-speed thermal image further includes a welding quality input unit 194. The welding quality input unit 194 may select either welding perfection or welding imperfection for input.

As an embodiment, the welding quality input unit 194 may adjust the position information of the block within the N×N blocks 260 and the percentage so as to indicate welding perfection or welding imperfection.

FIG. 3A is a diagram showing a change in temperature over time in one or more blocks where a key hole and a melt pool are positioned, and a reference value of the change, in the system for monitoring laser welding quality by using the high-speed thermal image according to the embodiment of the present disclosure.

As an embodiment, the temperature change detection unit 170 detects a change in temperature over time of each of the N×N blocks 260 in a welding part including the key hole 221 which is the 6×6 blocks, and the middle portion 241 of the melt pool which is the 4×4 blocks.

As shown in FIG. 3A, the change in temperature over time of each block appears in a trapezoidal shape when the laser generation unit 110 generates a laser normally. The change in temperature has a reference value, and the reference value includes a maximum value and a minimum value. A flat portion in the middle of the trapezoidal shape has the maximum value or the minimum value, and the maximum value and the minimum value are changeable;
As an embodiment, FIG. 3A shows changes in temperature over time of a block T34 320 and block T45s 330, 340, and 350 corresponding to the key hole 221, and a block T22 310 corresponding to the melt pool. The block T45s are the block 340 of which the change in temperature over time exceeds the maximum value, the block 330 of which the change in temperature over time is between the maximum value and the minimum value, and the block 350 of which the change in temperature over time is lower than the minimum value. The block T34 320 and the block T22 310 are the blocks of which the changes in temperature over time are between the maximum value and the minimum value.

The change in temperature over time of each of the N×N blocks 260 where the key hole 221 and the middle portion 241 of the melt pool are positioned, which is detected by the temperature change detection unit 170, and the reference value are stored in the memory 180.

The laser welding machine controller 190 compares the change in temperature over time of each of the N×N blocks 260, which is detected by the temperature change detection unit 170, and the reference value of the change in temperature over time that are stored in the memory 180.

As an embodiment, when the change in temperature over time of each of the N×N blocks 260, which is detected by the temperature change detection unit 170, is lower than the minimum value of the change in temperature over time, the laser welding machine controller 190 outputs welding imperfection as welding quality.

As an embodiment, even when the change in temperature over time of each of the N×N blocks 260, which is detected by the temperature change detection unit 170, is higher than the maximum value of the change in temperature over time, the laser welding machine controller 190 outputs welding imperfection as welding quality.

In the meantime, defects that may occur during laser welding may include, for example, spatter, a lack of fusion, a blowhole, and the like. In general, a protective gas is used to prevent the occurrence of such defects during laser welding. However, when the protective gas is defective, it is difficult to completely prevent the defects. Therefore, the defects may affect the change in temperature over time of each block.

FIG. 3B is a diagram showing one type of welding defect that causes a change in temperature over time in one or more blocks where a key hole and a melt pool are positioned, in the system for monitoring laser welding quality by using the high-speed thermal image according to the embodiment of the present disclosure.

As an example, spatter may occur. The spatter is made when small particles of molten metal are scattered and adhere to a material during welding. When the spatter adheres to the parent material, the surface becomes dirty, resulting in difficulty in processing and painting, and a bad influence on facility operation.

As shown in FIG. 3B, when there is spatter, a phenomenon that the temperature waveform positively peaks for a very short time in the middle of the temperature waveform occurs. Therefore, when the spatter occurs, it is determined that the block has a welding defect.

FIG. 3C is a diagram showing another type of welding defect that causes a change in temperature over time in one or more blocks where a key hole and a melt pool are positioned, in the system for monitoring laser welding quality by using the high-speed thermal image according to the embodiment of the present disclosure.

As another example of a welding defect, a lack of fusion may occur. The lack of fusion is a discontinuous defect that occurs in the case where a part of the molten metal in a welded joint is not completely melted during welding and thus, the welded joint is insufficiently filled with the molten metal for welding.

As shown in FIG. 3C, when a lack of fusion occurs, a phenomenon that the temperature waveform negatively peaks for a very short time in the middle of the temperature waveform occurs.

As described above, when the change in temperature over time is measured during laser welding, welding defects including the spatter, the lack of fusion, and the like are detected.

In the meantime, since the memory 180 stores the position information and the change in temperature over time of each of the N×N blocks 260, and the reference value, adjusting the percentage of the welding-perfection or welding-imperfection blocks is adjusting the reference value of changes in temperature of 100 blocks that are the N×N blocks 260.

For example, in the case where 90 blocks among the N×N blocks 260 have changes in temperature within the reference value and 10 blocks have changes in temperature outside the reference value or changes in temperature corresponding to the welding defects as shown in FIGS. 3B and 3C, if the welding quality input unit 194 inputs 95 % of the N×N blocks 260 as a welding-perfection condition, it is physically impossible to satisfy the welding-perfection condition.

However, for example, in the case where 95 blocks among the N×N blocks 260 have changes in temperature within the reference value and 5 blocks have changes in temperature outside the reference value or changes in temperature caused by the welding defects as shown in FIGS. 3B and 3C, if the welding quality input unit 194 inputs 90 % of the N×N blocks 260 as a welding-perfection condition, it is possible to satisfy the welding-perfection condition.

In this case, when the welding quality input unit 194 inputs welding perfection, and 90 % as the percentage of welding perfection, the laser welding machine controller 190 adjusts the range of the reference value in such a manner as to exclude five of the values of the changes in temperature over time of the respective blocks stored in the memory 180.

In addition, for example, in the case where 60 blocks among the N×N blocks 260 have changes in temperature within the reference value and 40 blocks have changes in temperature outside the reference value or changes in temperature caused by the welding defects as shown in FIGS. 3B and 3C, if the welding quality input unit 194 inputs 30 % of the N×N blocks 260 as a welding-imperfection condition, it is physically impossible to satisfy the welding-imperfection condition.

However, for example, in the case where 80 blocks among the N×N blocks 260 have changes in temperature within the reference value and 20 blocks have changes in temperature outside the reference value or changes in temperature caused by the welding defects as shown in FIGS. 3B and 3C, if the welding quality input unit 194 inputs 30 % of the N×N blocks 260 as the welding-imperfection condition, it is possible to satisfy the welding-imperfection condition.

In this case, when the welding quality input unit 194 inputs welding imperfection, and 30 % as the percentage of welding imperfection, the laser welding machine controller 190 adjusts the range of the reference value in such a manner as to exclude 10 of the values of the changes in temperature over time of the respective blocks stored in the memory 180.

FIG. 4 is a diagram showing a method of monitoring laser welding quality by using a high-speed thermal image according to an embodiment of the present disclosure.

As shown in FIG. 4, the method of monitoring laser welding quality by using a high-speed thermal image according to the embodiment of the present disclosure includes: inputting, at a first step S400, an image of a welding part including the key hole 221 and the middle portion 241 of the melt pool, which is acquired by the high-speed thermal imaging camera 160; allocating, at a second step S410, the N×N blocks 260 to the acquired image and detecting a change in temperature over time of each of the N×N blocks; comparing, at a third step S420, the change in temperature over time detected at each of the allocated N×N blocks 260 and the reference value of the change in temperature stored in the memory 180; and outputting, as welding quality at a fourth step S430, a state indicated by a predetermined percentage or more of the N×N blocks 260 according to a result of the comparison between the detected change in temperature and the reference value.

As an embodiment, the fourth step includes outputting, at a fifth step, welding perfection when changes in temperature over time of 80 % or more of the blocks corresponding to the key hole 221 and the middle portion 241 of the melt pool among the N×N blocks 260 are within the reference value.

As an embodiment, the fourth step includes outputting, at a fifth step, welding perfection when changes in temperature over time of 90 % or more of the blocks belonging to the key hole 221 among the N×N blocks 260 are within a range of the reference value.

As an embodiment, the fourth step includes outputting, at a sixth step, welding imperfection when changes in temperature over time of more than 20 % of the blocks corresponding to the key hole 221 and the middle portion 241 of the melt pool among the N×N blocks 260 are outside the reference value, or when a welding defect occurs.

The embodiments of the present disclosure have been described above for illustrative purpose, and those skilled in the art will understand that various modifications, additions and substitutions are possible, without departing from the scope and spirit of the disclosure as disclosed in the accompanying claims.

## Claims

1. A system for monitoring laser welding quality by using a high-speed thermal image, the system comprising:
a laser generation unit generating a laser to weld multiple metals and adjusting an output of the laser;
a scanner receiving the laser generated by the laser generation unit to generate a laser beam and emitting the laser beam to a boundary between the multiple metals;
a high-speed thermal imaging camera acquiring an image of a welding part including a key hole and a middle portion of a melt pool that are generated during laser welding;
a temperature change detection unit allocating N×N blocks to the acquired image, and detecting position information and a change in temperature over time of each of the N×N blocks;
a memory storing the position information and the change in temperature over time of each of the N×N blocks detected by the temperature change detection unit, and a reference value, wherein the change in temperature over time appears in a trapezoidal shape and has a reference value, the reference value including a maximum value and a minimum value, and wherein a flat portion in the middle of the trapezoidal shape has the maximum value or the minimum value, and the maximum value and the minimum value are changeable;
a welding quality input unit adjusting a percentage of welding perfection or welding imperfection;
a display device displaying, when the percentage is adjusted and the maximum value and the minimum value of the reference value are changed, a position of the block of which the change in temperature is outside the maximum value and the minimum value of the adjusted reference value, or displaying a position of the block in which a phenomenon that a temperature waveform for the change in temperature over time stored in the memory peaks for a very short time in the middle of the temperature waveform occurs; and
a laser welding machine controller comparing the change in temperature over time of each of the N×N blocks stored in the memory and the adjusted reference value, and outputting the adjusted percentage as the laser welding quality.

2. The system of claim 1, wherein the maximum value of the reference value occurs at a center portion of the key hole during the laser welding.

3. The system of claim 1, wherein the minimum value of the reference value occurs at an edge portion of the melt pool during the laser welding.
